# EUROPEAN PATENT SPECIFICATION

(11) **EP 4 197 822 B1**
(45) Date of publication and mention of the grant of the patent: **04.12.2024**
(21) Application number: 22213025.4
(22) Date of filing: 13.12.2022
(51) Int. Cl.: B60C 11/24

(54) **TIRE REPLACEMENT SYSTEM AND METHOD**
REIFENWECHSELSYSTEM UND -VERFAHREN
SYSTÈME ET PROCÉDÉ DE REMPLACEMENT DE PNEU

(30) Priority: 20.12.2021 US 202163291494 P; 16.11.2022 US 202218055973
(43) Date of publication of application: 21.06.2023
(73) Proprietor: The Goodyear Tire & Rubber Company, Akron, OH 44316 (US)
(72) Inventor: LOPEZ DE LA CRUZ, Juliana, L-8235 Mamer (LU); TORREGROSSA, Dario, L-2155 Luxembourg (LU); LAMBE, Michael, B-6767 Rouvroy (BE)
(74) Representative: Kutsch, Bernd

(56) References cited:
- JP-A- 2005 029 130
- US-A1- 2017 278 314
- US-A1- 2021 101 417

## Description

### Field of the Invention

The invention relates generally to tire monitoring systems. More particularly, the invention relates to systems and methods that collect tire parameter data to monitor tire wear. The invention is directed to a system and to methods for estimating the wear rate of a tire and generating a forecast for replacement of the tire.

### Background of the Invention

Tire wear refers to the loss of material from the tread of the tire as indicated by the depth of the tire tread. Measuring or predicting the wear state of the tire may be beneficial. For example, information about the wear state of a tire may be useful in predicting tire performance during vehicle braking and/or handling and may be used to determine when a tire should be replaced. In addition, the wear rate of the tire, which is the wear of the tire over time, may be useful in estimating tread depth as a function of time for predictions of tire performance and/or tire life.

Techniques have been developed to directly measure tire wear state using sensors that are attached to the tire. Direct techniques include certain advantages, such as relative simplicity in the approach of measurement of pressure, temperature and/or tread depth with a sensor. Direct techniques also include challenges, such as proper sensor mounting without affecting tire integrity, sensor life and/or transmission of sensor data in the harsh environment of a tire.

Due to such challenges, indirect techniques have been developed. Indirect techniques take certain tire and/or vehicle sensor measurements into account and then generate a prediction or estimate of tire state and/or tire wear rate. While indirect techniques do not necessarily encounter the challenges of sensor mounting, sensor life, and/or transmission of sensor data, they include challenges in achieving accuracy and repeatability in the estimation or prediction that is generated. For example, many indirect techniques have experienced disadvantages in the prior art due to a lack of optimum prediction techniques, which in turn reduces the accuracy and/or reliability of the tread wear predictions.

As a result, there is a need in the art for a system that accurately and reliably estimates the wear rate of a tire and generates a forecast for replacement of the tire.

US 2017/278314 A1 describes a system in accordance with the preamble of claim 1.

US 2021/101417 A1 describes a vehicle controller in which replacement time information, i.e. information on a scheduled replacement time of a tire according to wear rate may be stored in advance.

### Summary of the Invention

The invention relates to a system in accordance with claim 1 and to a method in accordance with claim 14 or 15 respectively.

Dependent claims refer to preferred embodiments of the invention.

According to an aspect of an exemplary embodiment of the invention, a tire replacement system for a tire supporting a vehicle is provided. The system includes a processor in electronic communication with an electronic system of the vehicle, and an electronic memory capacity for storing identification information for the tire. The processor receives identification information for the tire from the electronic memory capacity and vehicle data from the electronic system of the vehicle. A prediction model is in electronic communication with the processor and receives the identification information for the tire and the vehicle data. An identification of a replacement tread depth for the tire is included in the prediction model, and an estimation of remaining available distance for the tire to reach the replacement tread depth is determined by the prediction model. An estimation of remaining available time to reach the replacement tread depth is determined by the prediction model from the estimation of remaining available distance for the tire to reach the replacement tread depth. A residual correction module is in electronic communication with the processor and optimizes the estimation of the remaining available time for the tire to reach the replacement tread depth. A replacement lead time determination is generated by the tire replacement system and corresponds to the estimation of remaining available time for the tire to reach the replacement tread depth. A notification of the replacement lead time is generated by the tire replacement system and is transmitted to at least one of the electronic system of the vehicle, a cloud-based server, and a display device.

### Brief Description of the Drawings

The invention will be described by way of example and with reference to the accompanying drawings, in which:
Figure 1 is a schematic perspective view of one type of vehicle with a sensor-equipped tire employing an exemplary embodiment of the tire replacement system of the present invention;
Figure 2 is a schematic plan view of the type of vehicle shown in Figure 1;
Figure 3 is a schematic perspective view of the type of vehicle shown in Figure 1 with a representation of data transmission to a cloud-based server and to a user device;
Figure 4 is a schematic representation of aspects of the exemplary embodiment of the tire replacement system of the present invention;
Figure 5 is a graphical representation of an aspect of the exemplary embodiment of the tire replacement system of the present invention;
Figure 6 is a representation of an expression employed in an aspect of the exemplary embodiment of the tire replacement system of the present invention;
Figure 7 is a representation of another expression employed in an aspect of the exemplary embodiment of the tire replacement system of the present invention;
Figure 8 is a representation of another expression employed in an aspect of the exemplary embodiment of the tire replacement system of the present invention;
Figure 9 is a representation of another expression employed in an aspect of the exemplary embodiment of the tire replacement system of the present invention;
Figure 10 is a graphical representation of another aspect of the exemplary embodiment of the tire replacement system of the present invention;
Figure 11 is a graphical representation of another aspect of the exemplary embodiment of the tire replacement system of the present invention;
Figure 12 is a representation of another expression employed in an aspect of the exemplary embodiment of the tire replacement system of the present invention;
Figure 13 is a representation of another expression employed in an aspect of the exemplary embodiment of the tire replacement system of the present invention;
Figure 14 is a representation of another expression employed in an aspect of the exemplary embodiment of the tire replacement system of the present invention;
Figure 15 is a representation of another expression employed in an aspect of the exemplary embodiment of the tire replacement system of the present invention;
Figure 16 is a representation of another expression employed in an aspect of the exemplary embodiment of the tire replacement system of the present invention;
Figure 17 is a graphical representation of another aspect of the exemplary embodiment of the tire replacement system of the present invention;
Figure 18 is a schematic representation of another aspect of the exemplary embodiment of the tire replacement system of the present invention; and
Figure 19 is a graphical representation of another aspect of the exemplary embodiment of the tire replacement system of the present invention.

Similar numerals refer to similar parts throughout the drawings.

### Definitions

"ANN" or "Artificial Neural Network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.

"Axial" and "axially" means lines or directions that are parallel to the axis of rotation of the tire.

"CAN bus" is an abbreviation for controller area network.

"Circumferential" means lines or directions extending along the perimeter of the surface of the annular tread perpendicular to the axial direction.

"Cloud computing" or "cloud" means computer processing involving computing power and/or data storage that is distributed across multiple data centers, which is typically facilitated by access and communication using the Internet.

"EBS" is an abbreviation for a vehicle electronic braking system.

"Equatorial Centerplane (CP)" means the plane perpendicular to the tire's axis of rotation and passing through the center of the tread.

"Footprint" means the contact patch or area of contact created by the tire tread with a flat surface as the tire rotates or rolls.

"Groove" means an elongated void area in a tread that may extend circumferentially or laterally about the tread in a straight curved, or zigzag manner.

"Inboard side" means the side of the tire nearest the vehicle when the tire is mounted on a wheel and the wheel is mounted on the vehicle.

"Kalman Filter" is a set of mathematical equations that implement a predictor-corrector type estimator that is optimal in the sense that it minimizes the estimated error covariance when some presumed conditions are met.

"Lateral" means an axial direction.

"Luenberger Observer" is a state observer or estimation model. A "state observer" is a system that provide an estimate of the internal state of a given real system, from measurements of the input and output of the real system. It is typically computer-implemented, and provides the basis of many practical applications.

"MSE" is an abbreviation for mean square error, the error between and a measured signal and an estimated signal which the Kalman filter minimizes.

"Outboard side" means the side of the tire farthest away from the vehicle when the tire is mounted on a wheel and the wheel is mounted on the vehicle.

"PSD" is power spectral density (a technical name synonymous with FFT (fast fourier transform).

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Sipe" means small slots molded into the tread elements of the tire that subdivide the tread surface and improve traction, sipes are generally narrow in width and close in the tires footprint as opposed to grooves that remain open in the tire's footprint.

"Tread" means a molded rubber component which includes that portion of the tire that comes into contact with the road when the tire is normally inflated and under normal load.

"Tread depth" means a radial distance or dimension between the radially outermost surface of the tread elements and the radially outermost surface of the deepest groove of the tire.

"Tread element" or "traction element" means a rib or a block element defined by a shape having adjacent grooves.

### Detailed Description of Preferred Embodiments of the Invention

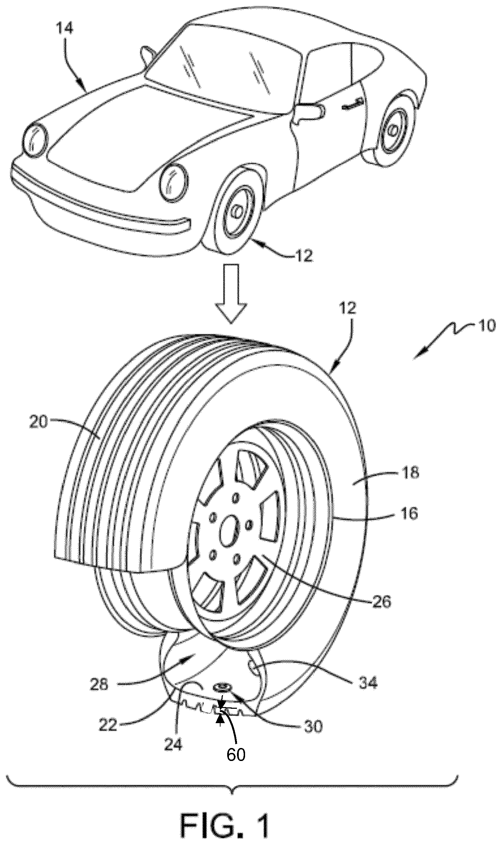

Turning now to Figures 1 through 19, an exemplary embodiment of the tire replacement system 10 of the present invention is presented. With particular reference to Figure 1, the system 10 estimates the wear rate and forecasts replacement of each tire 12 supporting a vehicle 14. While the vehicle 14 is depicted as a passenger car by way of example for the purpose of convenience, the invention is not to be so restricted. The principles of the invention find application in other vehicle categories such as commercial trucks and trailers, off-the-road vehicles, and the like, in which vehicles may be supported by more or fewer tires.

Each tire 12 includes a pair of bead areas 16 and a pair of sidewalls 18, in which each sidewall extends radially outward from a respective bead area to a ground-contacting tread 20. The tire 12 is reinforced by a carcass 22 that toroidally extends from one bead area 16 to the other bead area, as known to those skilled in the art. An innerliner 24 is formed on the inside surface of the carcass 22. The tire 12 is mounted on a wheel 26 in a manner known to those skilled in the art and, when mounted, forms an internal cavity 28 that is filled with a pressurized fluid, such as air.

A sensor unit 30 may be attached to the innerliner 24 of each tire 12 by means such as an adhesive and measures certain parameters or conditions of the tire 12, as will be described in greater detail below. It is to be understood that the sensor unit 30 may be attached in such a manner, or to other components of the tire 12, such as between layers of the carcass 22, on or in one of the sidewalls 18, on or in the tread 20, and/or a combination thereof. For the purpose of convenience, reference herein shall be made to mounting of the sensor unit 30 on the tire 12, with the understanding that such mounting includes all such attachment.

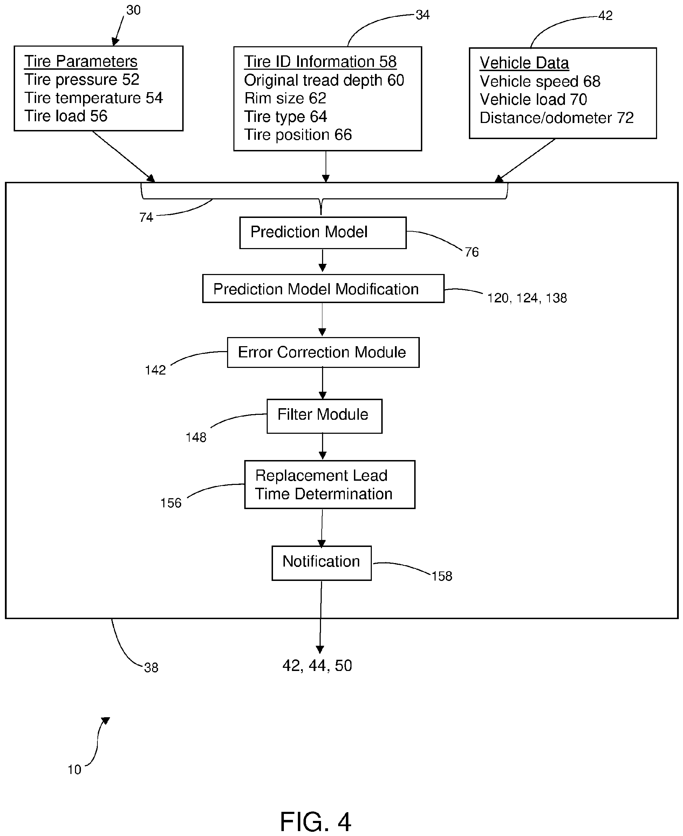

The sensor unit 30 is mounted on each tire 12 for the purpose of detecting certain real-time tire parameters, such as tire pressure 52 (Figure 4), temperature 54, and/or load 56. Preferably the sensor unit 30 is a tire pressure monitoring system (TPMS) module or sensor, of a type that is commercially available, and may be of any known configuration. For the purpose of convenience, the sensor unit 30 shall be referred to as a TPMS sensor. Each TPMS sensor 30 preferably also includes electronic memory capacity for storing identification (ID) information for each tire 12, known as tire ID information 58. Alternatively, tire ID information 58 may be included in another sensor unit, or in a separate tire ID storage medium, such as a tire ID tag 34.

The tire ID information 58 may include manufacturing information for the tire 12, such as: the tire type 64, such as a passenger tire, truck tire, trailer tire, steer tire, non-steer tire, and the like; tire model; original tread depth 60; size information, such as rim size 62, width, and outer diameter; manufacturing location; manufacturing date; a treadcap code that includes or correlates to a compound identification; and a mold code that includes or correlates to a tread structure identification. The tire ID information 58 may also include a service history or other information to identify specific features and parameters of each tire 12, as well as the location or position 66 of the tire on the vehicle 14. In addition, global positioning system (GPS) capability may be included in the TPMS sensor 30 and/or the tire ID tag 34 to provide location tracking of the tire 12 during transport and/or location tracking of the vehicle 14 on which the tire is installed.

It is to be understood that the TMPS sensor 30 and the tire ID tag 34 may be separate units or may be incorporated into a single sensor unit. In addition, other sensors known to those skilled in the art may be employed in the tire 12 as integrated or separate units. For the purpose of convenience, reference shall be made to the TMPS sensor 30 and the tire ID tag 34 as separate units, with the understanding that they may be incorporated into one integrated unit, and that other sensors may be employed.

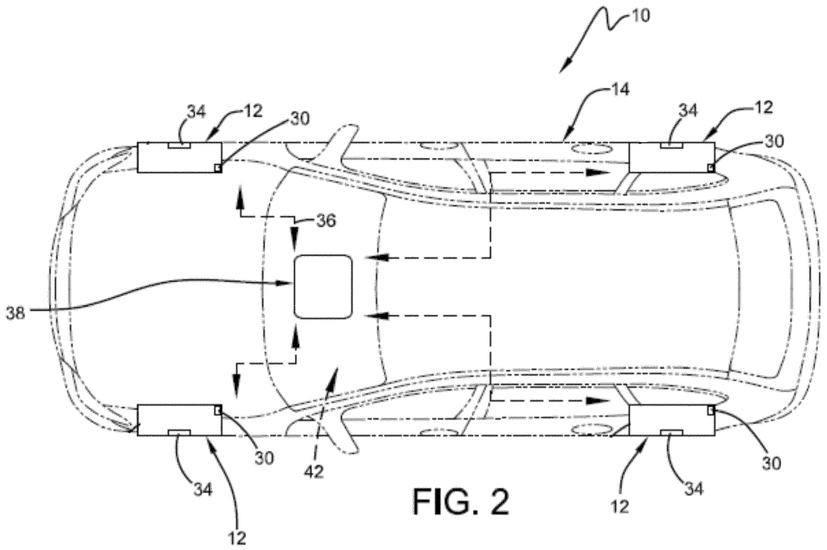

Turning now to Figure 2, the TMPS sensor 30 and the tire ID tag 34 each include an antenna for wireless transmission 36 of the measured parameters of tire pressure 52, tire temperature 54, and tire load 56, as well as tire ID information 58, to a processor 38. The processor 38 may be integrated into the TPMS sensor 30 or the tire ID tag 34, or may be a remote processor, which may be mounted on the vehicle 14 or may be cloud-based. For the purpose of convenience, the processor 38 will be described as a remote processor mounted on the vehicle 14, with the understanding that the processor may alternatively be cloud-based or integrated into the TPMS sensor unit 30 or the tire ID tag 34.

The processor 38 preferably is in electronic communication with an electronic system of the vehicle 14, such as the vehicle CAN bus system 42, which is referred to as the CAN bus, or the vehicle EBS. For the purpose of convenience, reference shall be made to the CAN bus 42, with the understanding that such reference includes other electronic systems of the vehicle 14, such as the vehicle EBS.

Aspects of the tire replacement system 10 preferably are executed on the processor 38, which enables input of data from the TMPS sensor 30 and the tire ID tag 34, as well as input of data from sensors that are mounted on the vehicle 14 and which are in electronic communication with the CAN bus. For example, vehicle-mounted or vehicle-based sensors include sensors that indicate vehicle data such as the vehicle speed 68, vehicle load 70, vehicle distance traveled 72 from an odometer, and the like.

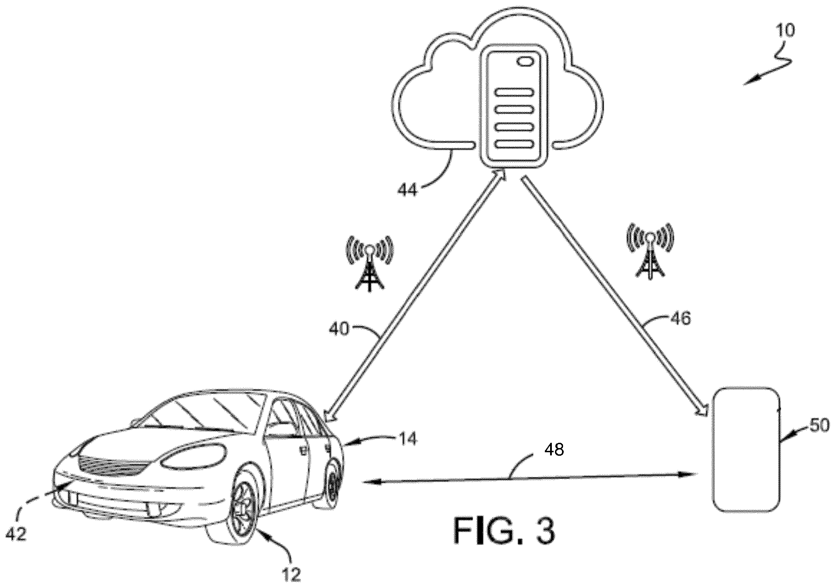

Referring to Figure 3, when the tire data, tire ID information, and vehicle data described above are collected and correlated for each tire 12, the data may be wirelessly transmitted 40 from the processor 38 (Figure 2) on the vehicle 14 to a processor in a cloud-based server 44. The data may be stored and/or remotely analyzed on the cloud-based server 44, and may also be wirelessly transmitted 46 to a display device 50 for a display that is accessible to a user of the vehicle 14, a technician, or a fleet manager, such as a smartphone or a computer. Alternatively, the data may be wirelessly transmitted 48 from the processor 38 on the vehicle 14 directly to the display device 50.

Turning to Figure 4, the tire replacement system 10 includes transmission of data 74 to the processor 38. Preferably, the data 74 includes the tire ID information 58, and specifically the original tread depth 60, the rim size 62, the tire type 64, and the tire position 66 on the vehicle 14, which are transmitted from the ID tag 34 to the processor 38. Alternatively, some or all of the tire ID information 58 may be stored on a database that is in electronic communication with the processor 38. The transmitted data 74 also includes vehicle data, such as vehicle distance traveled 72 from an odometer, which is transmitted from the CAN bus 42 to the processor 38.

To increase the accuracy of the tire replacement system 10, the transmitted data 74 may include additional data that is transmitted to the processor 38. For example, the tire pressure 52, the tire temperature 54, and/or the tire load 56 may be transmitted from the TPMS sensor 30 to the processor 38. The vehicle speed 68 and/or the vehicle load 70 may be transmitted from the CAN bus 42 to the processor 38. It is to be understood that other types of information may be included in the transmitted data 74, such as traffic conditions, road conditions, weather, and the like. Each set of transmitted data 74 is time-stamped, so that the transmitted data is correlated to a specific time of measurement. In this manner, multiple sets of transmitted data 74 may be generated, with each one having a specific time stamp.

The tire replacement system 10 includes a prediction model 76, which is stored on or is in electronic communication with the processor 38. The prediction model 76 receives the transmitted data 74 and generates a remaining available distance 100 and remaining available time 102 for the tire 12 to reach a replacement tread depth 82, as will be described in greater detail below. Preferably, the prediction model 76 employs a survival analysis technique, which is a statistical technique that analyzes data inputs, such as the transmitted data 74, to estimate a duration of time remaining until an event occurs for a given component, such as each tire 12.

The survival analysis technique employed by the prediction model 76 preferably is a parametric model, which assumes a fixed mathematical form to calculate an output. Residuals, which are differences between observed and predicted values, are then adjusted by a non-parametric model. The results are generated in different forms such as plots, files, and variables in an interactive environment. The survival analysis technique and the non-parametric models take multiple continuous and categorical parameters as input.

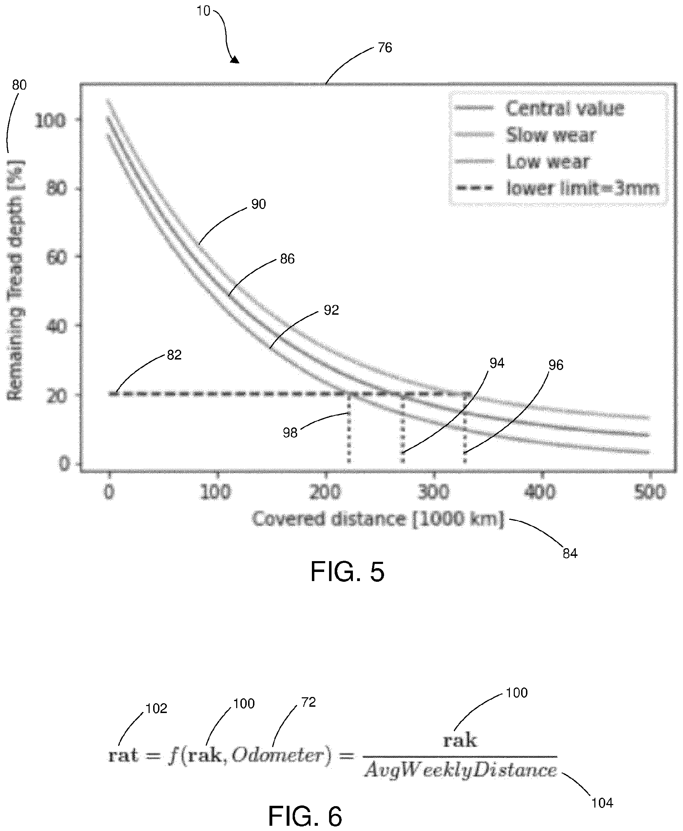

Each tire 12 includes an original tread depth 60, as shown in Figure 1. With reference to Figures 4 and 5, as the tire 12 wears, the tread depth decreases and is indicated as a remaining tread depth 80. The remaining tread depth 80 may be expressed as a dimension or a percentage of the original tread depth 60. A replacement tread depth 82 is identified, which may be a specific dimension or a specific percentage of the original tread depth 60. In Figure 5, the replacement tread depth 82 is set at 20 percent (%) of the original tread depth 60.

The survival analysis technique in the prediction model 76 generates a central decay curve 86 as a function of the remaining tread depth 80 versus a distance 84 traveled by the tire 12. The central decay curve 86 represents a typical expected wear rate for the tire 12. An upper decay curve 90 may also be generated, which represents a slower wear rate for the tire 12. A lower decay curve 92 may further be generated, which represents a faster wear rate for the tire 12.

For the typical expected wear rate 86, an expected travel distance for 84 the tire 12 to reach the replacement tread depth 82 is indicated at 94. For example, when the replacement tread depth 82 is set at 20% of the original tread depth 60, the expected distance 94 for the tire 12 to travel to reach the replacement tread depth is 270,000 kilometers (km). For the slower wear rate 90, an expected distance for the tire 12 to reach the replacement tread depth 82 is indicated at 96, which is 320,000 km. For the faster wear rate 92, an expected distance for the tire 12 to reach the replacement tread depth 82 is indicated at 98, which is 220,000 km.

Since the expected distance 94 for the tire 12 to reach the replacement tread depth 82 has been identified, a remaining available distance 100 (Figure 6) that the tire can travel may be generated. The tire ID information 58 provides a distance traveled by the vehicle 14 when the tire 12 was new and at its original tread depth 60. A current vehicle distance traveled 72 may be obtained from the odometer. The travel distance 84 experienced by the tires 12 may be determined by subtracting the travel distance 72 of the vehicle 14 when the tire 12 was new from the current travel distance of the vehicle.

The remaining available distance 100 at the typical expected wear rate 86 is calculated by subtracting the travel distance experienced by the tire 12 from the expected distance 94 for the tire to reach the replacement tread depth 82 at the typical expected wear rate. The remaining available distance 100 at the slower wear rate 90 is calculated by subtracting the travel distance experienced by the tire 12 from the expected distance 96 for the tire to reach the replacement tread depth 82 at the slower wear rate. The remaining available distance 100 at the faster wear rate 92 is calculated by subtracting the travel distance experienced by the tire 12 from the expected distance 98 for the tire to reach the replacement tread depth 82 at the faster wear rate.

As shown in Figure 6, the remaining available distance 100 may be converted to remaining available time 102 to reach the replacement tread depth 82. An average weekly distance 104 traveled by the vehicle 14 may be monitored through the vehicle distance traveled 72 from the odometer. The remaining available time 102 to reach the replacement tread depth 82 is determined by dividing the remaining available distance 100 by the average weekly distance 104.

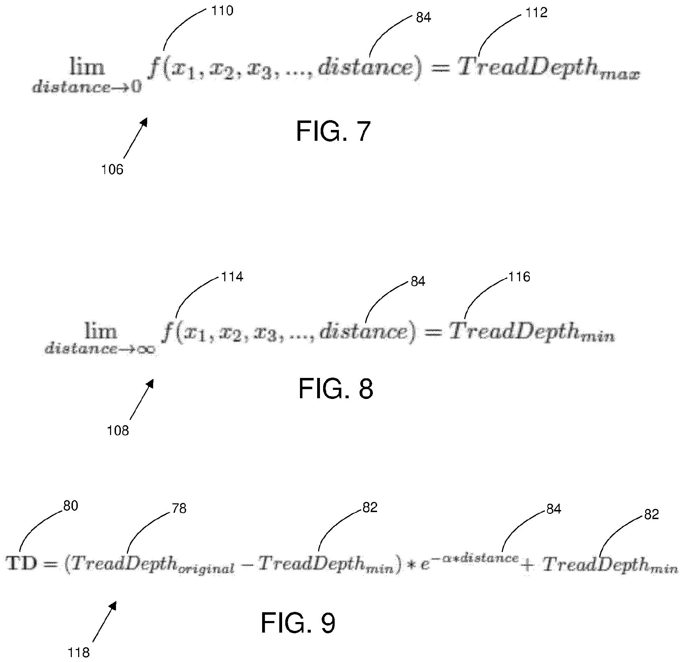

In order to provide greater accuracy for the tire replacement system 10, the precision of the decay curves 86, 90, 92 may be improved. One approach to improve such precision includes estimation of the tread depth 80 using physical parameters of the tire 12. For example, using an equation 106 shown in Figure 7, a first function 110 expresses an estimation of the tread depth 80 as a minimum tread depth 112 depending on several parameters, x₁, x₂, x₃. Using an equation 108 shown in Figure 8, a second function 114 expresses an estimation of the tread depth 80 as a maximum tread depth 116 depending on the parameters, x₁, x₂, x₃.

In each function 110 and 114, the parameters x₁, x₂, x₃ include selected available parameters from the transmitted data 74, such as the tire pressure 52, the tire temperature 54, and the tire load 56. The tire travel distance 84 is a consistently available parameter according to the determination above. In this manner, the precision of the decay curves 86, 90, 92 is improved, as when the travel distance 84 of the tire 12 is zero (0), the function 110 should return the maximum value 112 of the tread depth, which is the original depth 60. When the travel distance 84 of the tire 12 is an extremely large value, the function 114 should return the minimum value 116 of the tread depth, which is the replacement tread depth 82.

An equation 118 shown in Figure 9 is preferred to improve the precision of the precision of the decay curves 86, 90, 92 through estimation of the tread depth 80, which is an exponential decay function that includes the limits of equations 106 and 108. In equation 118, TD is the remaining tread depth 80 to be predicted, preferably in millimeters, TreadDepth_{original} is the original tread depth 60 of the tire 12, TreadDepthₘᵢₙ is the replacement tread depth 82, distance is the travel distance 84 of the tire, preferably in kilometers, and alpha (α) is a shape parameter that modifies the slope of the decay curves 86, 90, 92.

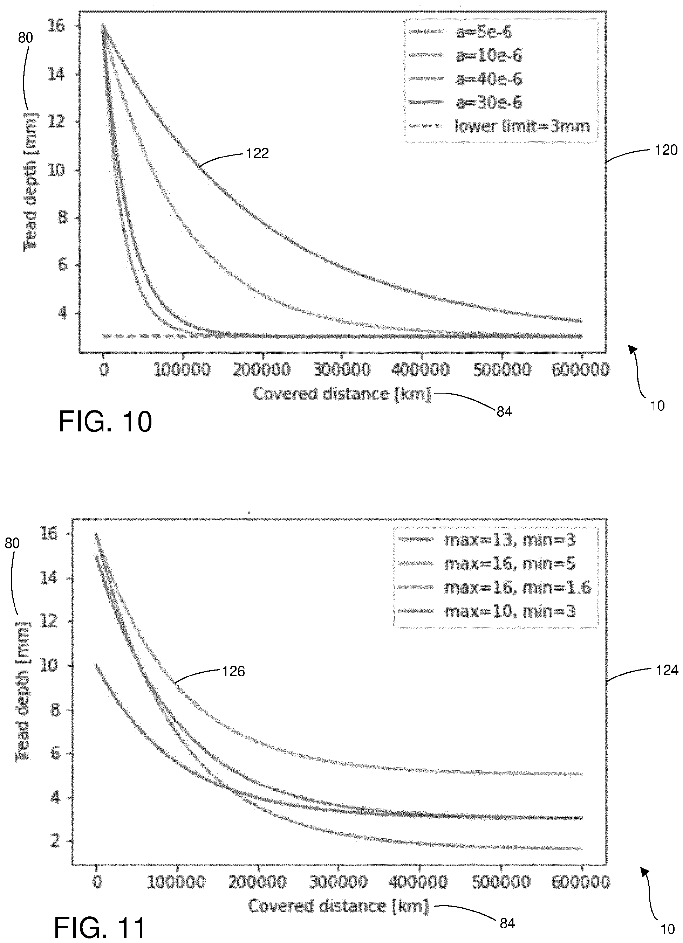

A modified prediction model 120 is shown in Figure 10, and illustrates an adjustment to decay curves 122 from the original decay curves 86, 90, 92 according to the shape parameter alpha α. An additional modified prediction model 124 is shown in Figure 11 and illustrates further adjustment to decay curves 126 according to the original tread depth 60 of the tire 12 and the replacement tread depth 82.

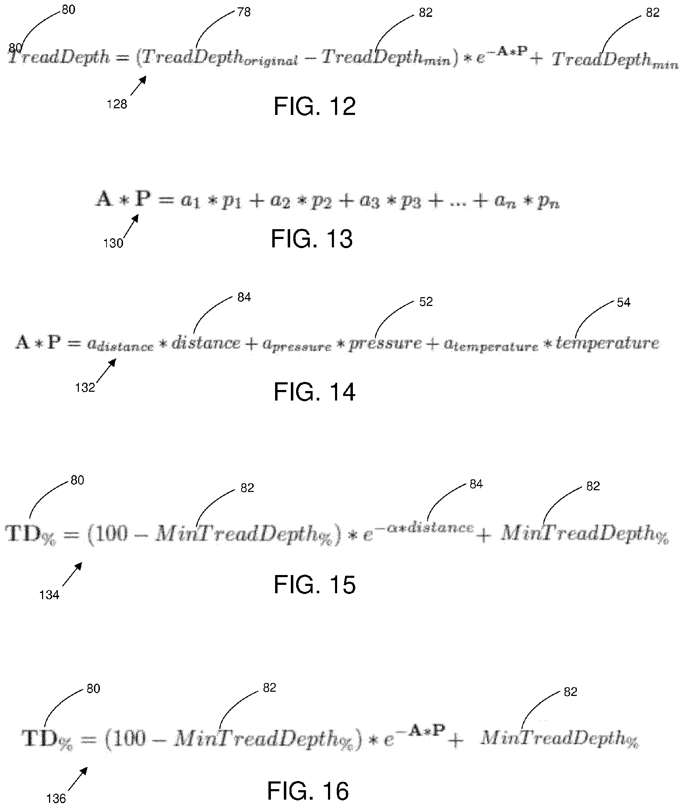

To account for as many variables or parameters as possible, the equation 118 may be modified to a final equation 128 as shown in Figure 12. In the final equation 128, the shape parameter alpha (α) is replaced by a matrix A, and the tire travel distance 84 is replaced by a matrix P of parameters. The dot product of matrix A and matrix P may be read as a linear transformation, which is indicated at 130 in Figure 13. An example of a linear transformation including specific parameters from the transmitted data 74 is indicated at 132 in Figure 14. The linear transformation 132 includes the travel distance 84 of the tire 12, the tire pressure 52, and the tire temperature 54. Additional parameters from the transmitted data 74 may be added to continue to increase the precision of the decay curves 86, 90, 92 and in turn increase the accuracy of the tire replacement system 10.

Another approach to improve the precision of the decay curves 86, 90, 92 to provide greater accuracy for the tire replacement system 10 includes estimation of the tread depth 80 as a percentage. In this case, the equation 118 shown in Figure 9 loses its geometric elements and assumes the form of equation 134 in Figure 15. In the equation 134, TD is the remaining tread depth 80 to be predicted as a percentage, MinTreadDepth_{%} is the replacement tread depth 82 of the tire 12 expressed as a percentage, distance is the travel distance 84 of the tire, preferably in kilometers, and alpha (α) is the shape parameter that modifies the slope of the decay curves 86, 90, 92.

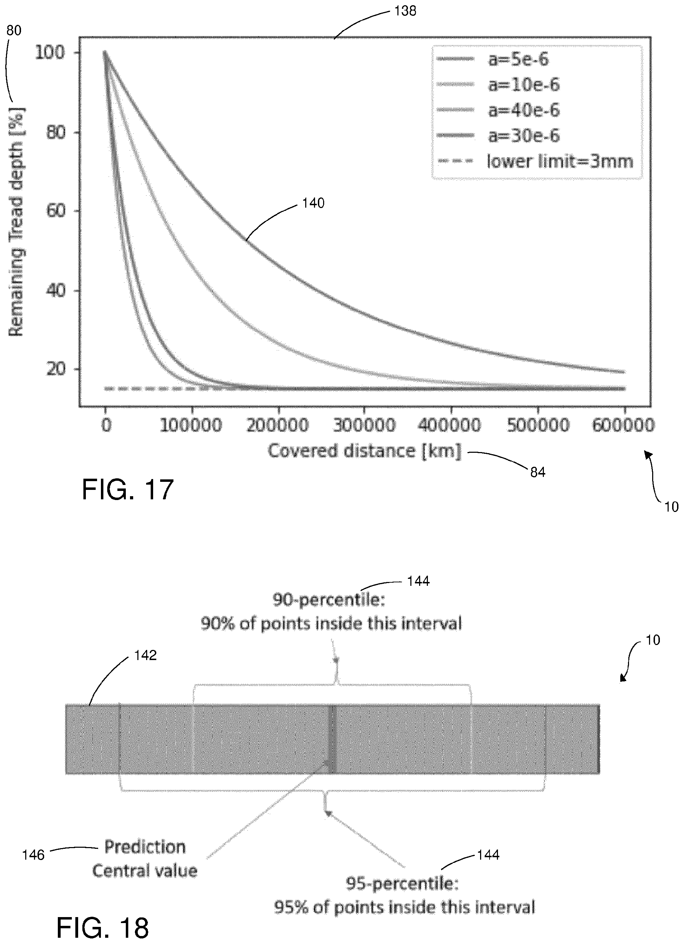

To account for as many variables or parameters as possible, the equation 134 may be modified to a final equation 136 as shown in Figure 16. In the final equation 136, the shape parameter alpha (α) is replaced by a matrix A, and the tire travel distance 84 is replaced by the matrix P of parameters. A modified prediction model 138 is shown in Figure 17 and illustrates an adjustment to decay curves 140 from the original decay curves 86, 90, 92 according to the shape parameter alpha α based on the replacement tread depth 82 of the tire 12 as a percentage.

As shown in Figure 4, the tire replacement system 10 preferably includes a residual or error correction module 142 to optimize the estimation of the remaining available time 102 for the tire 12 to reach the replacement tread depth 82. More particularly, the residual correction module 142 preferably includes a machine learning model that trains an analysis model, such as a Random Forest Model or a Neural Network Model, to minimize statistical error and thus optimize the estimation of the remaining available time 102 for the tire 12 to reach the replacement tread depth 82.

The model of the residual correction module 142 preferably is trained using about 60 percent (%) of the tires 12 for which the transmitted data 74 is received, while the remaining 40% is used to estimate the remaining available time 102 to reach the replacement tread depth 82. Preferably, the division between the 60% and 40% is determined using the tire ID information 58 to ensure that tires 12 used during the model training are not used to test the model to further optimize the accuracy of the tire replacement system 10.

The metrics used in the model of the residual correction module 142 preferably include an adjusted R², which is a modified coefficient of determination for the proportion of the variation in the dependent variable that is predicted from the independent variables as adjusted for the number of predictors in the model. The metrics preferably also include mean absolute error (MAE) between paired observations. The adjusted R² and the MAE are traditional metrics in model error computation.

The metrics in the model of the residual correction module 142 preferably also include predetermined percentiles of absolute error, as shown in Figure 18. For example, the metrics preferably include a 75-percentile of absolute error, a 90-percentile of absolute error, and a 95-percentile of absolute error. A central value of prediction 146 may not return a perfect match with a real observation, so it is preferable to identify a confidence interval 144 around the central value that will include the observed points. The confidence interval 144 is a range of estimates defined by a lower bound and upper bound and refers to the level of accuracy in the prediction. The larger the confidence interval 144, the larger the number of points that the interval includes. The objective is to include the largest part of points in the smaller interval of confidence 144.

In order to have a representative metrics, it is preferred to calculate the interval of confidence 144 that includes 75%, 90% and 95% of the error. For example, the remaining available time 102 for the tire 12 to reach the replacement tread depth 82 +/interval [95%] indicates that 95% of the time the tire will reach its end of life in the estimated remaining available time. The confidence intervals 144 preferably are determined by calculating the absolute error of each point of the test database and generating a list, and the desired percentile on the list is generated at the previous point. The confidence interval 144 can be adjusted to any desired percentage, such as 50%, 75%, and 95%.

It is to be understood that, because the replacement tread depth 82 of the tire 12 is expressed as a percentage, the error around the central value is also expressed as a percentage of the original tread depth 60. To convert the error to a dimension, the error may be multiplied by the original tread depth 60 dimension. For example, if the 95% percentile of the error is 10%, to convert to a dimension, 10% * 16mm equals 1.6mm when the tire 12 was at an original tread depth 60 of 16mm. Consequently, 95% of points will be included in a range between the central value provided by the model and 1.6mm.

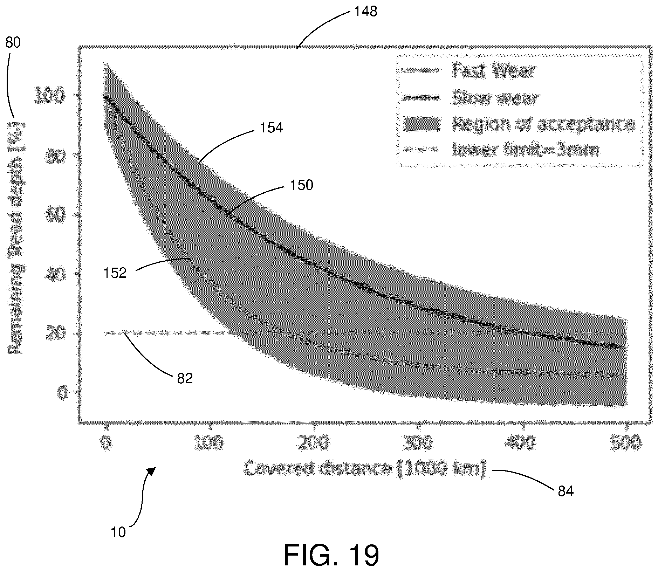

Referring to Figures 4 and 19, an optional filter module 148 is stored on or is in electronic communication with the processor 38. More particularly, in order to improve the accuracy of the tire replacement system 10, it is beneficial to filter certain data 74. For example, data for certain tires 12 may be filtered out, such as tires that do not have recognizable ID information 58, tires that have been retreaded as indicated by the tire ID information, and tires that have experienced significant tread wear before the tire replacement system 10 was implemented, such as more than 0.5 millimeters (mm) of tread loss.

The filter module 148 preferably also filters out data 74 tires 12 for which insufficient data points exist, so that the tire replacement system 10 may accurately analyze trends in the data transmitted to the processor 38. Moreover, the filter module 148 preferably manages outliers in the transmitted data 74. Specifically, to manage outliers, the filter module 148 removes individually isolated points or points for which tread depth is anomalous, such as tires 12 with no wear after 100,000 km, or tires that are fully worn after 5000 km. A preferred technique employed by the filter module 148 includes using transmitted data 74 for only tires 12 with a predetermined wear rate range, such as a wear rate that is greater than 0.3mm for each 10,000 km in tire traveled distance 84 and lower than 4 mm for each 10,000 km of tire traveled distance.

As shown in Figure 19, in the filter module 148, a slow wear curve 150 and a fast wear curve 152 may be determined. An acceptance region 154 for data may be generated, which is obtained by shifting the slow wear curve 150 up by a predetermined amount, such as about 10%, and by shifting the fast wear curve 152 down by a predetermined amount, such as about 10%. Data in the acceptance region 154 thus is accepted and employed in the tire replacement system 10.

Returning to Figure 4, after the transmitted data 74 is processed by the prediction model 76, the model modifications 120, 124, and/or 138 are performed, the error correction is executed in the residual correction module 142, and the data is filtered in the filter module 148, a replacement lead time determination 156 is generated by the tire replacement system 10. The replacement lead time determination 156 corresponds to the remaining available time 102 for the tire 12 to reach the replacement tread depth 82 at the time of the determination.

A notification 158 of the replacement lead time determination 156 is generated by the tire replacement system 10, which is transmitted to the CAN bus 42 or other vehicle electronic control system, the cloud-based server 44, and/or the display device 50. In this manner, the notification 158 of the replacement lead time determination 156 is communicated to a user of the vehicle 14, a technician, and/or a fleet manager. The notification 158 preferably is sent at a predetermined lead time, such as about three (3) months before the replacement tread depth 82 for a fast-wearing tire 12. The number and frequency of the notifications 158 may be adjusted as desired, such as to 12 months, 6 months, 3 months, and 1 month before tire 12 reaches the replacement tread depth 82.

In this manner, the tire replacement system 10 of the present invention accurately and reliably estimates the wear rate of a tire 12 and generates a forecast for replacement of the tire. Parameters can be added or suppressed for use in the system 10 based on their availability and on the accuracy of the estimation that is generated. The tire replacement system 10 focuses on the remaining time available for the tire 12 to be used until a replacement tread depth 82 is reached. The tire replacement system 10 finds application in tires 12, vehicles 14, and fleets of vehicles with different characteristics and uses, such as long haul trucks, regional haul trucks, mixed service trucks, buses, and passenger fleets.

The present invention also includes a method of estimating the wear rate of a tire 12 and a method of generating a forecast for replacement of the tire. Each method includes steps in accordance with the description that is presented above and shown in Figures 1 through 19.

It is to be understood that the structure and method of the above-described tire replacement system may be altered or rearranged, or components or steps known to those skilled in the art omitted or added, without affecting the overall concept or operation of the invention. For example, while the vehicle 14 is depicted as a passenger car for the purpose of convenience, the invention finds application in other vehicle categories such as commercial trucks and trailers, off-the-road vehicles, and the like, in which vehicles may be supported by more or fewer tires.

## Claims

1. A replacement system for a tire (12) supporting a vehicle (14), the vehicle including an electronic system (42), the system (10) comprising:
an electronic memory capacity for storing identification information for the tire (12);
a processor (38) in electronic communication with the electronic system (42) of the vehicle (14), the processor being configured for receiving identification information for the tire (12) from the electronic memory capacity and vehicle data from the electronic system (42) of the vehicle (14);
a prediction model in electronic communication with the processor (38) and being configured for receiving the identification information for the tire (12) and the vehicle data;
an identification means of a replacement tread depth for the tire (12) included in the prediction model;
an estimation means of remaining available distance for the tire (12) to reach the replacement tread depth being determined by the prediction model;
**characterized in that the system further comprises**
an estimation means of remaining available time to reach the replacement tread depth being determined by the prediction model from the estimation means of remaining available distance for the tire to reach the replacement tread depth;
a residual correction module in electronic communication with the processor to optimize the estimation of the remaining available time for the tire to reach the replacement tread depth;
a replacement lead time determination being generated by the tire replacement system and corresponding to the estimation of remaining available time for the tire (12) to reach the replacement tread depth; and
a notification of the replacement lead time being generated by the tire replacement system and transmitted to at least one of the electronic system (42) of the vehicle (14), a cloud-based server (44), and a display device (50).

2. The system of claim 1, wherein the tire identification information includes an original tread depth of the tire (12), a rim size of the tire (12), a type of the tire (12), and a position of the tire (12) on the vehicle (14); and/or wherein the vehicle data includes at least one of a vehicle distance traveled, a vehicle speed, and a vehicle load.

3. The system of claim 1 or 2 , wherein the electronic system (42) of the vehicle (14) includes at least one of a controlled area network bus and an electronic braking system.

4. The system of at least one of the previous claims, further comprising a sensor unit (30) mounted to the tire (12) and in electronic communication with the processor (38), the sensor unit (30) being configured for measuring tire parameters, the tire parameters including at least one of tire pressure, tire temperature, and tire load, wherein the prediction model is configured to receive the tire parameters.

5. The system of at least one of the previous claims, wherein the prediction model is configured to employ a survival analysis technique; and/or wherein the prediction model is configured to generate at least one decay curve as a function of a remaining tread depth versus a distance traveled by the tire (12), in which the at least one decay curve represents a wear rate for the tire (12).

6. The system of at least one of the previous claims, wherein the prediction model is configured to generate a decay curve for a typical wear rate of the tire (12), a decay curve for a slow wear rate of the tire (12), and a decay curve for a fast wear rate of the tire (12).

7. The system of at least one of the previous claims, wherein an expected travel distance for the tire (12) to reach the replacement tread depth is identified from the at least one decay curve, and, optionally, wherein the estimation of remaining available distance for the tire (12) to reach the replacement tread depth is calculated by subtracting a travel distance experienced by the tire (12) from the expected distance for the tire (12) to reach the replacement tread depth.

8. The system of at least one of the previous claims, wherein a precision of the at least one decay curve is improved by an estimation of a remaining tread depth of the tire (12) using physical parameters of the tire (12), the physical parameters of the tire (12) including at least one of a travel distance of the tire (12), a tire pressure, and a tire temperature; and/or wherein the prediction model includes a shape parameter to modify a slope of the at least one decay curve.

9. The system of at least one of the previous claims, wherein the estimation of a remaining tread depth of the tire (12) is estimated as a dimension or as a percentage.

10. The system of at least one of the previous claims, wherein the estimation of remaining available distance is converted to the estimation of remaining available time to reach the replacement tread depth by dividing the estimation of remaining available distance by an average time-based distance traveled by the vehicle (14).

11. The system of at least one of the previous claims, wherein the residual correction module includes a machine learning model, and, optionally, wherein the machine learning model includes predetermined percentiles of absolute error and/or identifies a confidence interval around a central value that includes observed points.

12. The system of at least one of the previous claims, further comprising a filter module (148) in electronic communication with the processor (38), and, optionally, wherein the filter module (148) allows the tire replacement system (10) to employ data when the tire (12) is within a predetermined wear rate range.

13. The system of claim 12, wherein the filter module (148) is configured to employ an acceptance region about a slow wear curve and a fast wear curve, wherein the slow wear curve and the fast wear curve are functions of a remaining tread depth versus a distance traveled by the tire (12).

14. A replacement method for a tire (12) supporting a vehicle (14), the vehicle (14) including an electronic system (42), the method comprising:
providing an electronic memory capacity for storing identification information for the tire (12);
providing a processor (38) in electronic communication with the electronic system (42) of the vehicle (14), the processor (38) receiving identification information for the tire (12) from the electronic memory capacity and vehicle data from the electronic system of the vehicle (14);
providing a prediction model in electronic communication with the processor (38) and receiving the identification information for the tire (12) and the vehicle data;
providing an identification means of a replacement tread depth for the tire (12) included in the prediction model;
providing an estimation of remaining available distance for the tire (12) to reach the replacement tread depth determined by the prediction model;
**characterized in that the method further comprises**
providing an estimation of remaining available time to reach the replacement tread depth determined by the prediction model from the estimation means of remaining available distance for the tire to reach the replacement tread depth;
providing a residual correction module in electronic communication with the processor (38) optimizing the estimation of the remaining available time for the tire (12) to reach the replacement tread depth;
providing a generated replacement lead time determination corresponding to the estimation of remaining available time for the tire (12) to reach the replacement tread depth; and
providing a notification of the replacement lead time and transmitting it to at least one of the electronic system (42) of the vehicle (14), a cloud-based server (44), and a display device (50).

15. A replacement method for a tire supporting a vehicle according to claim 14 using a system in accordance with at least one of the previous claims 2 to 13.

## Patentansprüche

1. Ersatzsystem für einen Reifen (12), der ein Fahrzeug (14) trägt, wobei das Fahrzeug ein elektronisches System (42) enthält, wobei das System (10) das Folgende umfasst:
eine elektronische Speicherkapazität zum Speichern von Identifikationsinformationen für den Reifen (12);
einen Prozessor (38), der in elektronischer Kommunikation mit dem elektronischen System (42) des Fahrzeugs (14) steht, wobei der Prozessor so konfiguriert ist, dass er Identifikationsinformationen für den Reifen (12) von der elektronischen Speicherkapazität und Fahrzeugdaten von dem elektronischen System (42) des Fahrzeugs (14) empfängt;
ein Vorhersagemodell, das in elektronischer Kommunikation mit dem Prozessor (38) steht und so konfiguriert ist, dass es die Identifikationsinformationen für den Reifen (12) und die Fahrzeugdaten empfängt;
ein Mittel zur Identifizierung einer Ersatzprofiltiefe für den Reifen (12), das in dem Vorhersagemodell enthalten ist;
ein Mittel zur Schätzung der verbleibenden Strecke, die dem Reifen (12) zur Verfügung steht, um die Ersatzprofiltiefe zu erreichen, die durch das Vorhersagemodell bestimmt wird;
**dadurch gekennzeichnet, dass** das System ferner Folgendes umfasst
ein Mittel zur Schätzung der verbleibenden verfügbaren Zeit, um die Ersatzprofiltiefe zu erreichen, die durch das Vorhersagemodell aus dem Mittel zur Schätzung der verbleibenden Strecke bestimmt wird, die dem Reifen zur Verfügung steht, um die Ersatzprofiltiefe zu erreichen;
ein Restkorrekturmodul, das in elektronischer Kommunikation mit dem Prozessor steht, um die Schätzung der verbleibenden Zeit zu optimieren, die dem Reifen zur Verfügung steht, um die Ersatzprofiltiefe zu erreichen;
eine Bestimmung der Ersatzvorlaufzeit, die von dem Reifenersatzsystem erzeugt wird und der Schätzung der verbleibenden Zeit entspricht, die dem Reifen (12) zur Verfügung steht, um die Ersatzprofiltiefe zu erreichen; und
eine Benachrichtigung über die Ersatzvorlaufzeit, die von dem Ersatzsystem des Reifens erzeugt und auf mindestens einen von einem elektronischen System (42) des Fahrzeugs (14), einem Cloud-basierten Server (44) und einem Anzeigegerät (50) übertragen wird.

2. System nach Anspruch 1, wobei die Reifenidentifikationsinformationen eine ursprüngliche Profiltiefe des Reifens (12), eine Felgengröße des Reifens (12), einen Typ des Reifens (12) und eine Position des Reifens (12) auf dem Fahrzeug (14) umfassen; und/oder wobei die Fahrzeugdaten mindestens eine der folgenden Informationen umfassen: eine zurückgelegte Fahrzeugstrecke, eine Fahrzeuggeschwindigkeit und eine Fahrzeuglast.

3. System nach Anspruch 1 oder 2, wobei das elektronische System (42) des Fahrzeugs (14) mindestens einen CAN-Datenbus und ein elektronisches Bremssystem enthält.

4. System nach mindestens einem der vorhergehenden Ansprüche, das ferner eine Sensoreinheit (30) umfasst, die an dem Reifen (12) angebracht ist und in elektronischer Verbindung mit dem Prozessor (38) steht, wobei die Sensoreinheit (30) so konfiguriert ist, dass sie Reifenparameter misst, wobei die Reifenparameter mindestens einen von dem Reifendruck, dem Reifentemperatur und der Reifenlast umfassen, wobei das Vorhersagemodell so konfiguriert ist, dass es die Reifenparameter empfängt.

5. System nach mindestens einem der vorhergehenden Ansprüche, wobei das Vorhersagemodell so konfiguriert ist, dass es eine Überlebensanalysetechnik anwendet; und/oder wobei das Vorhersagemodell so konfiguriert ist, dass es mindestens eine Abklingkurve als Funktion einer verbleibenden Profiltiefe gegenüber einer von dem Reifen (12) zurückgelegten Strecke erzeugt, wobei die mindestens eine Abklingkurve eine Verschleißrate für den Reifen (12) darstellt.

6. System nach mindestens einem der vorhergehenden Ansprüche, wobei das Vorhersagemodell so konfiguriert ist, dass es eine Abklingkurve für eine typische Verschleißrate des Reifens (12), eine Abklingkurve für eine langsame Verschleißrate des Reifens (12) und eine Abklingkurve für eine schnelle Verschleißrate des Reifens (12) erzeugt.

7. System nach mindestens einem der vorhergehenden Ansprüche, wobei eine erwartete Fahrstrecke für den Reifen (12), um die Ersatzprofiltiefe zu erreichen, aus der mindestens einen Abklingkurve identifiziert wird, und wobei optional die Abschätzung der verbleibenden Strecke berechnet, die dem Reifen (12) zur Verfügung steht, um die Ersatzprofiltiefe zu erreichen, indem eine von dem Reifen (12) erfahrene Fahrstrecke von der erwarteten Strecke für den Reifen (12), um die Ersatzprofiltiefe zu erreichen, subtrahiert wird.

8. System nach mindestens einem der vorhergehenden Ansprüche, wobei eine Genauigkeit der mindestens einen Abklingkurve durch eine Schätzung einer verbleibenden Profiltiefe des Reifens (12) unter Verwendung physikalischer Parameter des Reifens (12) verbessert wird, wobei die physikalischen Parameter des Reifens (12) mindestens einen von einer Fahrstrecke des Reifens (12), einem Reifendruck und einer Reifentemperatur einschließen; und/oder wobei das Vorhersagemodell einen Formparameter einschließt, um eine Steigung der mindestens einen Abklingkurve zu modifizieren.

9. System nach mindestens einem der vorhergehenden Ansprüche, wobei die Schätzung der verbleibenden Profiltiefe des Reifens (12) als Maß oder als Prozentsatz geschätzt wird.

10. System nach mindestens einem der vorhergehenden Ansprüche, wobei die Schätzung der verbleibenden verfügbaren Strecke in die Schätzung der verbleibenden verfügbaren Zeit, um die um die Ersatzprofiltiefe zu erreichen, umgewandelt wird, indem die Schätzung der verbleibenden verfügbaren Strecke durch eine durchschnittliche zeitbasierte Strecke, die das Fahrzeug (14) zurückgelegt hat, dividiert wird.

11. System nach mindestens einem der vorhergehenden Ansprüche, wobei das Restkorrekturmodul ein maschinelles Lernmodell enthält, und wobei das maschinelle Lernmodell optional vorbestimmte Perzentile des absoluten Fehlers enthält und/oder ein Konfidenzintervall um einen zentralen Wert herum identifiziert, das beobachtete Punkte enthält.

12. System nach mindestens einem der vorhergehenden Ansprüche, das ferner ein Filtermodul (148) umfasst, das in elektronischer Kommunikation mit dem Prozessor (38) steht, und wobei optional das Filtermodul (148) es dem Reifenwechselsystem (10) ermöglicht, Daten zu verwenden, wenn sich der Reifen (12) innerhalb eines vorbestimmten Verschleißratenbereichs befindet.

13. System nach Anspruch 12, wobei das Filtermodul (148) so konfiguriert ist, dass es einen Akzeptanzbereich um eine langsame Verschleißkurve und eine schnelle Verschleißkurve verwendet, wobei die langsame Verschleißkurve und die schnelle Verschleißkurve Funktionen einer verbleibenden Profiltiefe in Abhängigkeit von einer von dem Reifen (12) zurückgelegten Strecke sind.

14. Verfahren zum Ersetzen eines Reifens (12), der ein Fahrzeug (14) trägt, wobei das Fahrzeug (14) ein elektronisches System (42) enthält, wobei das Verfahren umfasst:
das Bereitstellen einer elektronischen Speicherkapazität zum Speichern von Identifikationsinformationen für den Reifen (12);
das Bereitstellen eines Prozessors (38), der in elektronischer Kommunikation mit dem elektronischen System (42) des Fahrzeugs (14) steht, wobei der Prozessor (38) Identifikationsinformationen für den Reifen (12) von der elektronischen Speicherkapazität und Fahrzeugdaten von dem elektronischen System des Fahrzeugs (14) empfängt;
das Bereitstellen eines Vorhersagemodells, das in elektronischer Kommunikation mit dem Prozessor (38) steht und das Empfangen der Identifikationsinformationen für den Reifen (12) und der Fahrzeugdaten;
das Bereitstellen eines Mittels zur Identifizierung einer Ersatzprofiltiefe für den Reifen (12), das in dem Vorhersagemodell enthalten ist;
das Bereitstellen einer Schätzung der verbleibenden Strecke, die dem Reifen (12) zur Verfügung steht, um die durch das Vorhersagemodell bestimmte Ersatzprofiltiefe zu erreichen;
**dadurch gekennzeichnet, dass** das Verfahren ferner Folgendes umfasst
das Bereitstellen einer Schätzung der verbleibenden verfügbaren Zeit, um die Ersatzprofiltiefe zu erreichen, die durch das Vorhersagemodell aus dem Mittel zur Schätzung der verbleibenden verfügbaren Strecke für den Reifen bestimmt wird, um die Ersatzprofiltiefe zu erreichen;
das Bereitstellen eines Restkorrekturmoduls, das in elektronischer Kommunikation mit dem Prozessor (38) steht, das die Schätzung der verbleibenden verfügbaren Zeit für den Reifen (12) optimiert, um die Ersatzprofiltiefe zu erreichen;
das Bereitstellen einer erzeugten Bestimmung der Vorlaufzeit für das Ersetzen, die der Schätzung der verbleibenden Zeit entspricht, die dem Reifen (12) zur Verfügung steht, um die Ersatzprofiltiefe zu erreichen; und
das Bereitstellen einer Benachrichtigung über die Vorlaufzeit für das Ersetzen und das Übertragen dieser Benachrichtigung an mindestens eines der folgenden Systeme: das elektronische System (42) des Fahrzeugs (14), einen Cloud-basierten Server (44) und ein Anzeigegerät (50).

15. Verfahren zum Ersetzen eines Reifens, der ein Fahrzeug nach Anspruch 14 trägt, unter Verwendung eines Systems nach mindestens einem der vorhergehenden Ansprüche 2 bis 13.

## Revendications

1. Système de remplacement pour un bandage pneumatique (12) qui supporte un véhicule (14), le véhicule englobant un système électronique (42), le système (10) comprenant :
une capacité de mémoire électronique destinée à stocker des informations d'identification pour le bandage pneumatique (12) ;
un processeur (38) qui est mis en communication par voie électronique avec le système électronique (42) du véhicule (14), le processeur étant configuré pour recevoir des informations d'identification pour le bandage pneumatique (12) à partir de la capacité de mémoire électronique ainsi que des données du véhicule à partir du système électronique (42) du véhicule (14) ;
un modèle de prédiction qui est mis en communication par voie électronique avec le processeur (38) et qui est configuré pour recevoir les informations d'identification pour le bandage pneumatique (12), ainsi que les données du véhicule ;
un moyen d'identification d'une profondeur de bande de roulement de remplacement pour le bandage pneumatique (12) qui est inclus dans le modèle de prédiction ;
un moyen d'estimation de la distance disponible qui subsiste pour le bandage pneumatique (12) nécessaire pour atteindre la profondeur de bande de roulement de remplacement qui est déterminée par le modèle de prédiction ;
**caractérisé en ce que** le système comprend en outre :
un moyen d'estimation du laps de temps disponible qui subsiste pour atteindre la profondeur de bande de roulement de remplacement qui est déterminée par le modèle de prédiction à partir du moyen d'estimation de la distance disponible qui subsiste pour permettre au bandage pneumatique d'atteindre la profondeur de bande de roulement de remplacement ;
un module de correction résiduelle qui est mis en communication par voie électronique avec le processeur dans le but d'optimiser l'estimation du laps de temps disponible qui subsiste pour permettre au bandage pneumatique d'atteindre la profondeur de bande de roulement de remplacement ;
une détermination du délai d'exécution du remplacement qui est générée par le système de remplacement du bandage pneumatique et de manière correspondante à l'estimation du laps de temps disponible qui subsiste pour permettre au bandage pneumatique (12) d'atteindre la profondeur de bande de roulement de remplacement ; et
une notification du délai d'exécution du remplacement qui est générée par le système de remplacement du bandage pneumatique et qui est transmise à au moins un élément choisi parmi le système électronique (42) du véhicule (14), un serveur infonuagique (44) et un dispositif d'affichage (50).

2. Système selon la revendication 1, dans lequel les informations d'identification du bandage pneumatique englobent une profondeur de bande de roulement originale du bandage pneumatique (12), une dimension de la jante du bandage pneumatique (12), un type du bandage pneumatique (12) et une position du bandage pneumatique (12) sur le véhicule (14) ; et/ou dans lequel les données du véhicule englobent au moins une donnée choisie parmi une distance parcourue du véhicule, une vitesse du véhicule et une charge du véhicule.

3. Système selon la revendication 1 ou 2, dans lequel le système électronique du véhicule (14) englobe au moins un élément choisi parmi un bus de données CAN et un système de freinage électronique.

4. Système selon au moins une des revendications précédentes, qui comprend en outre une unité de détection (30) qui est montée sur le bandage pneumatique (12) et qui est mise en communication par voie électronique avec le processeur (38), l'unité de détection (30) étant configurée pour mesurer des paramètres du bandage pneumatique, les paramètres du bandage pneumatique englobant au moins un paramètre choisi parmi la pression du bandage pneumatique, la température du bandage pneumatique et la charge du bandage pneumatique ; dans lequel le modèle de prédiction est configuré pour recevoir les paramètres du bandage pneumatique.

5. Système selon au moins une des revendications précédentes, dans lequel le modèle de prédiction est configuré pour utiliser une technique d'analyse de survie; et/ou dans lequel le modèle de prédiction est configuré pour générer au moins une courbe de décroissance sous la forme d'une fonction d'une profondeur de bande de roulement qui subsiste par rapport à une distance parcourue par le bandage pneumatique (12), dans lequel ladite au moins une courbe de décroissance représente un taux d'usure pour le bandage pneumatique (12).

6. Système selon au moins une des revendications précédentes, dans lequel le modèle de prédiction est configuré pour générer une courbe de décroissance pour un taux d'usure typique de bandage pneumatique (12), une courbe de décroissance pour un taux d'usure lent du bandage pneumatique (12) et une courbe de décroissance pour un taux d'usure rapide du bandage pneumatique (12.)

7. Système selon au moins une des revendications précédentes, dans lequel une distance de parcours escomptée pour le bandage pneumatique (12) pour atteindre la profondeur de bande de roulement de remplacement est identifié à partir de ladite au moins une courbe de décroissance, et, de manière facultative, dans lequel l'estimation de la distance disponible qui subsiste pour permettre au bandage pneumatique (12) d'atteindre la profondeur de bande de roulement de remplacement est calculée en soustrayant une distance effectivement parcourue par le bandage pneumatique (12) de la distance escomptée pour permettre au bandage pneumatique (12) d'atteindre la profondeur de bande de roulement de remplacement.

8. Système selon au moins une des revendications précédentes, dans lequel une précision de ladite au moins une courbe de décroissance est améliorée par l'intermédiaire d'une estimation d'une profondeur de bande de roulement qui subsiste du bandage pneumatique (12) en utilisant des paramètres physiques du bandage pneumatique (12), les paramètres physiques du bandage pneumatique (12) englobant au moins un paramètre choisi parmi une distance de parcours du bandage pneumatique (12), une pression du bandage pneumatique et une température du bandage pneumatique ; et/ou dans lequel le modèle de prédiction englobe un paramètre de configuration destiné à modifier une pente de ladite au moins une courbe de décroissance.

9. Système selon au moins une des revendications précédentes, dans lequel l'estimation d'une profondeur de bande de roulement qui subsiste du bandage pneumatique (12) est présentée sous la forme d'une dimension ou sous la forme d'un pourcentage.

10. Système selon au moins une des revendications précédentes, dans lequel l'estimation de la distance disponible qui subsiste est convertie en estimation du laps de temps disponible qui subsiste pour atteindre la profondeur de bande de roulement de remplacement en divisant l'estimation de la distance disponible qui subsiste par une distance moyenne basée sur le temps, parcourue par le véhicule (14).

11. Système selon au moins une des revendications précédentes, dans lequel le module de correction résiduelle englobe un modèle d'apprentissage machine et, de manière facultative, dans lequel le modèle d'apprentissage machine englobe des percentiles prédéterminés d'erreur absolue et/ou identifie une zone d'incertitude de mesurage autour d'une valeur centrale qui englobe des points observés.

12. Système selon au moins une des revendications précédentes, qui comprend en outre un module de filtration (148) qui est mis en communication par voie électronique avec le processeur (38) et, de manière facultative, dans lequel le module de filtration (148) permet au système de remplacement du bandage pneumatique (10) d'utiliser des données lorsque le bandage pneumatique (12) rentre dans une plage de taux d'usure prédéterminée.

13. Système selon la revendication 12, dans lequel le module de filtration (148) est configuré pour utiliser un intervalle d'acceptation autour d'une courbe d'usure lente et d'une courbe d'usure rapide ; dans lequel la courbe d'usure lente et la courbe d'usure rapide sont des fonctions d'une profondeur de bande de roulement qui subsiste par rapport à une distance parcourue par le bandage pneumatique (12).

14. Procédé de remplacement pour un bandage pneumatique (12) qui supporte un véhicule (14), le véhicule (14) englobant un système électronique (42), le procédé comprenant le fait de :
procurer une capacité de mémoire électronique destinée à stocker des informations d'identification pour le bandage pneumatique (12) ;
procurer un processeur (38) qui est mis en communication par voie électronique avec le système électronique (42) du véhicule (14), le processeur recevant des informations d'identification pour le bandage pneumatique (12) à partir de la capacité de mémoire électronique ainsi que des données du véhicule à partir du système électronique (42) du véhicule (14) ;
procurer un modèle de prédiction qui est mis en communication par voie électronique avec le processeur (38) et recevoir les informations d'identification pour le bandage pneumatique (12), ainsi que les données du véhicule ;
procurer un moyen d'identification d'une profondeur de bande de roulement de remplacement pour le bandage pneumatique (12) qui est inclus dans le modèle de prédiction ;
procurer un moyen d'estimation de la distance disponible qui subsiste pour le bandage pneumatique (12) nécessaire pour atteindre la profondeur de bande de roulement de remplacement qui est déterminée par le modèle de prédiction ;
**caractérisé en ce que** le procédé comprend en outre le fait de :
procurer une estimation du laps de temps disponible qui subsiste pour atteindre la profondeur de bande de roulement de remplacement qui est déterminée par le modèle de prédiction à partir du moyen d'estimation de la distance disponible qui subsiste pour permettre au bandage pneumatique d'atteindre la profondeur de bande de roulement de remplacement ;
procurer un module de correction résiduelle qui est mis en communication par voie électronique avec le processeur (38) dans le but d'optimiser l'estimation du laps de temps disponible qui subsiste pour permettre au bandage pneumatique (12) d'atteindre la profondeur de bande de roulement de remplacement ;
procurer une détermination générée du délai d'exécution du remplacement d'une manière qui correspond à l'estimation du laps de temps disponible qui subsiste pour permettre au bandage pneumatique (12) d'atteindre la profondeur de bande de roulement de remplacement ; et
procurer une notification du délai d'exécution du remplacement et la transmettre à au moins un élément choisi parmi le système électronique (42) du véhicule (14), un serveur infonuagique (44) et un dispositif d'affichage (50).

15. Procédé de remplacement pour un bandage pneumatique qui supporte un véhicule en conformité avec la revendication 14, en utilisant un système en conformité avec au moins une des revendications précédentes 2 à 13.
